# EUROPEAN PATENT APPLICATION

(11) **EP 1 961 974 A1**
(43) Date of publication of application: **27.08.2008**
(21) Application number: 06834198.1
(22) Date of filing: 07.12.2006
(51) Int. Cl.: F15B 15/06, F15B 11/064, F15B 21/14, F16K 31/163

(54) **VALVE ACTUATOR**

(30) Priority: 16.12.2005 JP 2005362602
(71) Applicant: Kitamura Valve MFG. CO., Ltd., Saitama-shi, Saitama 336-0963 (JP)
(72) Inventor: BABA, Akihisa, Saitama 336-0963 (JP); KUNIEDA, Wataru, Saitama 336-0963 (JP)
(74) Representative: Hedges, Martin Nicholas
(86) International application number: PCT/JP2006/324443
(87) International publication number: WO 2007/069526

(57) **Abstract**

A valve actuator in which condensation is prevented. A piston (5) connected to a valve (1) is urged by a spring (16) in a predetermined direction. Also, the piston (5) is received in a cylinder (4) so as to be slidable in the opposite direction against the spring (16) by pressurized air sent from a pressurized air inlet (6a). When pressurized air inlets (4a, 6a) of the cylinder (4) and a pressurized air source (18) are being communicated with each other, a solenoid valve (11) closes a circulation tube (22) connected to air outlets (4b, 6b) of the cylinder (4). When the communication between the pressurized air inlet (4a, 6a) of the cylinder (4) and a pressurized air source (18) are shutoff, the circulation tube (22) is communicated to the pressurized air inlet (4a, 6a).

## Description

### TECHNICAL FIELD

The present invention relates to a valve actuator that opens and closes a valve by turning a stem of a valve with movement of a piston that reciprocates with compressed air in a cylinder.

### BACKGROUND OF THE INVENTION

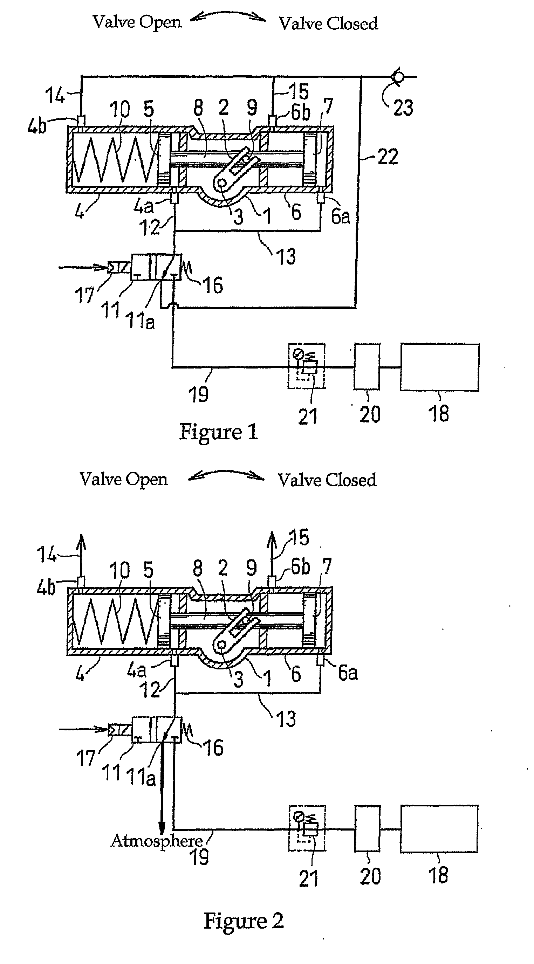

Fig. 2 is a top plan view of a conventional valve actuator.

A valve (not shown) such as a ball valve in a valve body 1 turns within the range of about 90 degrees between a right-hand closing direction and a left-hand opening direction by a stem 3 of the base end of a turning forked rod 2.

The turning forked rod 2 engages with a pin 9 projecting upward on a connecting rod 8 connecting a piston 5 within a spring-having cylinder 4 to a piston 7 within a non-spring cylinder 6.

The piston 5 in the spring-having cylinder 4 is urged rightward by a compression spring 10.

Air inlets 4a,6a at the right ends of the cylinders 4,6 or right sides of the pistons 5,7 are connected to supply conduits 12,13 from a solenoid valve 11 or a selector valve respectively.

Outlets 4b,6b at the left ends of the cylinders 4,6 are connected to discharge conduits 14,15 respectively.

The solenoid valve 11 is always urged by a spring 16 leftward to allow the supply conduits 12,13 to open to the atmosphere and moved by an electromagnet 17 against the spring 16 rightward to allow the supply conduits 12,13 to communicate with an air-introducing conduit 19 extending from a dehumidified compressed air source 18.

A filter 20 and a regulator 21 are provided at the air-introducing conduit 19 between the dehumidified compressed air source 18 and the solenoid valve 11.

Fig. 2 shows that the valve is closed without urging the electromagnet 17. The solenoid valve 11 is pressed by the spring 16 and positioned at the left side. Compressed air in the right parts of the pistons 5,7 in the cylinders 4,6 is released through the supply conduits 12,13 and the outlet 11a of the solenoid valve 11.

By the electromagnet 17, the solenoid valve 11 moves rightward against the spring 16. So compressed dehumidified air is sent to the inlets 4a,6a of the cylinders 4,6 via the supply conduits 12,13 respectively. The pistons 5,7 move leftward by the connecting rod 8 to allow the valve to open. Air in the cylinders 4,6 at the left sides of the pistons 5,7 is discharged through the discharge conduits 14,15.

As mentioned above, in the conventional actuator in Fig. 2, air is sucked in the cylinders 4,6, whenever the valve opens and closes. Moisture in air condenses in the cylinders 4,6 owing to temperature change. The insides of the cylinders 4,6 rust and corrode by condensate for longtime use to cause malfunction and air leak.

It is an object of the invention to provide a valve actuator in which the disadvantages are solved by simple means.

### BRIEF DESCRIPTION OF THE DRAWINGS:

Fig. 1 is a top plan view of an embodiment of a valve actuator according to the present invention.

Fig. 2 is a top plan view of a conventional valve actuator.

### BEST MODE FOR CARRYING OUT THE INVENTION

The present invention is shown in Fig. 1 to which Fig. 2 is modified. The same numerals are assigned to the same elements and detailed description thereof is omitted. Only different parts will be described.

In Fig. 2, the discharge conduits 14,15 from the cylinders 4,6 communicate with the atmosphere. In contrast, in Fig. 1, the discharge conduits 14,15 are connected to an outlet 11a of a solenoid valve 11 that is not actuated by an electromagnet 17, and communicates with the atmosphere via a check valve 23.

Unless discharge gas actuated by the pistons 5,7 has higher pressure than a certain value, it cannot be released to the atmosphere or air cannot be sucked with operation.

If discharge gas with operation of the pistons 5,7 has higher pressure than a certain pressure, it will be released to the atmosphere via the check valve 23.

Thus, the insides of the cylinders 4,6 and pistons 5,6 are not subjected to adverse effects by air moisture and fine particles or excessive load.

The present invention can apply to what has a single spring-having cylinder and what has two cylinders opposite to each other.

Instead of a solenoid valve, a suitable number of different selector valves may be used.

A valve may be a linearly moving valve instead of a rotary valve.

A piston actuated by compressed air may be a rotary piston instead of a linear piston.

## Claims

1. A valve actuator in which a piston connected to a valve is urged in a certain direction by a spring, the piston being slidable in an opposite direction against the spring by compressed air supplied from an inlet, a circulating conduit connected to an outlet of the cylinder being blocked when a compressed air inlet of the cylinder communicates with a compressed air source via a selector valve, while said circulating conduit communicates with the compressed air inlet when the compressed air inlet is not allowed by the selector valve to communicate with the compressed air source.

2. The valve actuator of claim 1 wherein the circulating conduit includes a check valve for releasing a gas to the atmosphere when inside pressure is higher than a certain value.
